# EUROPÄISCHE PATENTSCHRIFT

(11) **EP 1 197 324 B1**
(45) Veröffentlichungstag und Bekanntmachung des Hinweises auf die Patenterteilung: **29.12.2004**
(21) Anmeldenummer: 01124007.4
(22) Anmeldetag: 09.10.2001
(51) Int. Cl.: B32B 31/00, C09J 123/10, C09J 127/06, B32B 15/08

(54) **Verfahren zur Herstellung einer Verbundfolie und danach hergestellte Verbundfolie**
Method for making a composite film and composite film obtained therewith
Méthode pour la fabrication d'une feuille composite et feuille composite ainsi obtenue

(30) Priorität: 11.10.2000 DE 10050253
(43) Veröffentlichungstag der Anmeldung: 17.04.2002
(73) Patentinhaber: Hueck Folien GmbH & Co. KG, 92712 Pirk (DE)
(72) Erfinder: Henkens, Conrad, 92670 Windischeschenbach (DE); Pöllmann, Karl, Dr., 92681 Erbendorf (DE)
(74) Vertreter: Schneck, Herbert, Dipl.-Phys., Dr.

(56) Entgegenhaltungen:
- DE-C- 19 721 731
- FR-A- 1 323 247
- GB-A- 2 071 110

## Beschreibung

Die Erfindung richtet sich auf ein Verfahren zur Herstellung einer Verbundfolie, insbesondere für Lebensmittelverpackungen gemäß dem Oberbegriff von Anspruch 1.

Solche Folien sind an sich bekannt aus DE 197 21 731 C1, DE 31 08 895 A1, CADA, Oldrich, u.a.: Über die Verklebung von hydroisolierenden PVC-Folien. In: Adhäsion 1980, H. 1, Seite 14 bis 18, sowie LUCKE, H.: Kunststoffe und ihre Verklebung, Verlag Brunke Garrels, Hamburg, Juni 1967 Seite 103 bis 105.

Aus FR-A-1 323 247 ist es an sich bekannt, eine PVC-Folie auf ein Blech mittels eines Kaschierklebers auf Basis eines Teerpolymeren aufzutragen, das Lösungsmittel anschließend zu verdampfen und die beiden flächigen Komponenten bei erhöhtem Druck und erhöhter Temperatur zu verbinden.

Die GB 2 071 110 A beschreibt ein modifiziertes Polypropylen, welches als Kaschiermittel zwischen einer Lage Metall und einer Lage eines Polymers eingesetzt werden kann, wobei es sich bei dem Polymer um Polypropylen und Polyester handeln kann, und wobei das modifizierte Polypropylen als Lösung oder Suspension aufgetragen werden kann.

Verbundfolien werden in der Verpackungstechnik in großem Umfang eingesetzt, wobei z. B. die eingesetzte Aluminiumfolie licht-, dampf- und a-romaundurchlässig ist, so daß solche Folien insbesondere zur Verpackung von Arznei- und Lebensmitteln eingesetzt werden können.

Wenn aus solchen Verbundfolien Behälter hergestellt werden, so wird diejenige Seite des Verbundes, die später die Innenseite des Behälters bildet, mit einem üblicherweise thermoplastischen Kunststoff kaschiert, wobei als Kaschiermittel vorzugsweise Polyurethankleber eingesetzt werden. Bei nicht sachgerechter Verwendung können primäre aromatische Amine entstehen und anschließend in das Füllgut gelangen.

Zur Vermeidung der Verwendung solcher Kaschierklebstoffe auf Polyurethanbasis sind Extrusionskaschierungen bekannt, welche aber den Nachteil aufweisen, daß sie aufwendig, nur für große Losgrößen geeignet, teuer und für bestimmte Kunststoffe nicht anwendbar sind.

Diese Probleme werden vermieden durch Verbundfolien der eingangs genannten Art, wo als Kaschiermittel ein chemisch und/oder physikalisch von dem aufzukaschierenden Kunststoff abgeleitetes Mittel verwendet wird, d. h. mit anderen Worten ein zu dem aufzukaschierenden Kunststoff homologes Kaschiermittel.

Der Erfindung liegt die Aufgabe zugrunde, ein Verfahren zur Herstellung einer Verbundfolie zu schaffen, wobei die Verbundfolie zur Verpackung von Lebensmitteln geeignet sein soll, eine Kunststoff-Folie der Verbundfolie der Behälterinnenseite zugewandt ist, diese der Innenseite des Behälters zugewandte Kunststoff-Folie so mit einer Trägerfolie, insbesondere einer Aluminium-Folie verbunden ist, dass eine Migration aus dem Kaschiermittel heraus vermieden wird und eine wirtschaftliche Herstellung auch für kleinere Losgrößen ohne die Notwendigkeit einer Extrusionskaschierung möglich sein soll.

Diese Aufgabe wird gelöst gemäß dem kennzeichnenden Teil von Anspruch 1.

Ein wesentlicher Vorteil dieses Verfahrens besteht in der Regel im Wegfall reaktiver Komponenten und von Reaktionslagerzeiten.

Im Rahmen der Erfindung kann vorgesehen sein, daß noch weitere Schichten aufgebracht werden, z. B. eine duroplastische Schicht, die bei aus der Verbundfolie geformten Behältern dann die Außenseite bildet und vorzugsweise aus Polyamid oder Polyester bestehen kann.

Auch das Aufkaschieren dieser Folie erfolgt mit einem erfindungsgemäßen Kaschiermittel, d. h. eine Polyamidfolie wird mittels einer Polyamidlösung und eine Polyesterfolie mittels einer Polyesterlösung aufgebracht. Zur Herstellung der PVC-Lösung kann beispielsweise Ethylacetat als Lösungsmittel verwendet werden. Entsprechend wird eine Polypropylenfolie beispielsweise mit einer Polypropylen-Dispersion aufkaschiert. Zum Aufkaschieren einer Polyethylenfolie kann eine PE EVA-Dispersion eingesetzt werden, wobei auch hier alle Komponenten nicht migrieren.

Zusammenfassend lässt sich feststellen, daß erfindungsgemäß eine chemikalienbeständige, sterilisationsfähige Verbundfolie geschaffen wird, welche in kleinen Losgrößen herstellbar ist und mit oder ohne Verwendung einer äußeren aufkaschierten Folie aus duroplastischem Kunststoff die Herstellung siegelfähiger Behälter ermöglicht.

Gegenüber herkömmlichen, bekannten derartigen Folien zeichnen sich erfindungsgemäß hergestellte Folien und hieraus hergestellte Behälter durch folgende Eigenschaften aus:
- wesentlich verbesserte Chemikalienbeständigkeit;
- deutlich verbesserte Verbundfestigkeit;
- merklich erhöhte Verformbarkeit.

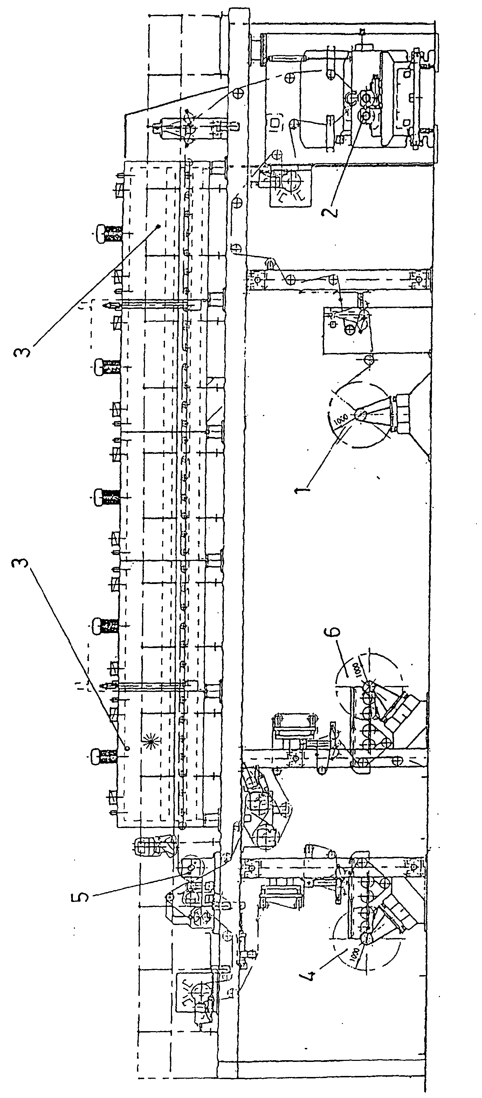

Nachfolgend wird die Erfindung anhand eines bevorzugten Ausführungsbeispiels in Verbindung mit der Zeichnung näher beschrieben. Die Zeichnung zeigt eine schematische Darstellung einer an sich bekannten Kaschierstation.

Hergestellt wird ein Verbund aus einer 60µm PVC-Folie mit einer 20µm Aluminiumfolie, wobei als Kaschiermittel ein PVC-Mischpolymerisat aus einer 20%-igen Lösung des PVC-Mischpolymerisates in Ethylacetat eingesetzt wird.

Dabei wird die Aluminiumfolie von einer ersten Abrollstation 1 abgerollt und in einem Auftragswerk 2 mit dem PVC-Mischpolymerisat beschichtet, welches in einem Trockenkanal 3 getrocknet wird.

Von einer zweiten Abrollstation 4 wird PVC-Folie abgerollt und in einer Kaschierstation 5 werden Aluminiumfolie und PVC-Folie bei einer Temperatur zwischen 120°C und 180°C und unter Druck zusammengefahren. Die so gebildete Verbundfolie wird in einer Aufrollstation 6 aufgerollt.

## Patentansprüche

1. Verfahren zur Herstellung einer Verbundfolie für Lebensmittelverpackungen, wobei wenigstens eine der Folien eine Kunststoff-Folie ist und dazu bestimmt ist, in der fertigen Verpackung der Innenseite zugewandt zu sein, **dadurch gekennzeichnet, dass** von einer ersten Abrollstation eine erste Folie, insbesondere eine Aluminium-Folie (Trägerfolie), abgerollt wird und in einem Auftragswerk mit einer Lösung oder Dispersion des Kunststoffs der Kunststoff-Folie beschichtet und anschließend in einem Trockenkanal unter völliger Verdampfung der Flüssigkeit der Lösung oder Dispersion getrocknet wird, dass von einer zweiten Abrollstation die Kunststoff-Folie abgerollt und in einer Kaschierstation die erste Folie und die Kunststoff-Folie bei einer Temperatur zwischen 120°C und 180°C und einem Kaschierdruck von 25 N/cm bis 40 N/cm zusammenfahren und die so gebildete Verbundfolie in einer Aufrollstation aufgerollt wird.

2. Verfahren nach Anspruch 1, **dadurch gekennzeichnet, dass** auf die andere Seite der Trägerfolie eine weitere, insbesondere duroplastische Schicht aufkaschiert wird.

3. Verfahren nach Anspruch 2, **dadurch gekennzeichnet, dass** die weitere Schicht aus Polyamid oder aus Polyester besteht.

## Revendications

1. Méthode pour la fabrication d'une feuille composite pour les emballages alimentaires dans laquelle au moins une des feuilles est une feuille plastique destinée à être tournée vers l'intérieur de l'emballage terminé, **caractérisée en ce qu'**une première feuille, en particulier une feuille d'aluminium (feuille support), est déroulée par une première station de déroulage et est enduite dans un enducteur avec une solution ou une dispersion du plastique de la feuille plastique puis est séchée dans un tunnel de séchage avec évaporation complète du solvant de la solution ou de la dispersion, **en ce que** la feuille de plastique est déroulée par une seconde station de déroulage et **en ce que** la première feuille et la feuille de plastique sont entraînées ensemble à une température comprise entre 120 et 180°C et à une pression de contrecollage de 25 à 40 N/cm et que la feuille composite ainsi formée est enroulée sur une station d'enroulage.

2. Méthode selon la revendication 1, **caractérisée en ce qu'**une autre couche, notamment une couche thermodurcissable, est contrecollée sur l'autre face de la feuille support.

3. Méthode selon la revendication 2, **caractérisée en ce que** l'autre couche est constituée de polyamide ou de polyester.

## Claims

1. A process for producing a multi-layer film, especially for food packaging, wherein at least one of the films is a plastic film, **characterized in that** a first film, in particular an aluminum foil (carrier film), is unwound from a first dispensing station and in an application installation is coated with a solution or dispersion of the plastic of the plastic film and subsequently dried in a drying channel, the fluid of the solution or dispersion vaporizing completely, and **in that** the plastic film is unwound from a second dispensing station and in a laminating station the first film and the plastic film are joined at a temperature between 120°C and 180°C and under a laminating pressure between 25 N/cm and 40 N/cm and the multi-layer film produced in this manner is rolled up in a winding station.

2. A process according to claim 1, **characterized in that** a further, especially duroplastic, layer is laminated onto the other side of the carrier film.

3. A process according to claim 3, **characterized in that** the further layer is composed of polyamide or polyester.
